# EUROPÄISCHE PATENTSCHRIFT

(11) **EP 1 132 726 B1**
(45) Veröffentlichungstag und Bekanntmachung des Hinweises auf die Patenterteilung: **09.05.2007**
(21) Anmeldenummer: 01105034.1
(22) Anmeldetag: 01.03.2001
(51) Int. Cl.: G01J 9/00

(54) **Vorrichtung zur Ermittlung der Lichtlaufzeit**
Device for detecting a propagation time of light
Dispositif de détection d'un temps de parcours de la lumière

(30) Priorität: 02.03.2000 DE 10010212
(43) Veröffentlichungstag der Anmeldung: 12.09.2001
(73) Patentinhaber: SICK AG, 79183 Waldkirch (DE)
(72) Erfinder: Blümcke, Thomas, 79312 Emmedingen (DE); Torabi, Bahram, Dr., 79106 Freiburg (DE)
(74) Vertreter: Manitz, Finsterwald & Partner GbR

(56) Entgegenhaltungen:
- DE-A- 4 328 553
- PATENT ABSTRACTS OF JAPAN Bd. 013, Nr. 363 (P-918), 14. August 1989 (1989-08-14) & JP 1 123110 A (OLYMPUS OPTICAL CO LTD), 16. Mai 1989 (1989-05-16)

## Beschreibung

Die Erfindung betrifft eine Vorrichtung zur Ermittlung der Lichtlaufzeit mit einem von einem Oszillator beaufschlagten Lichtsender, einem Lichtempfänger, einer Mischstufe, sowie einer Auswerteeinheit, wobei ein Eingang der Mischstufe von einem Oszillator-Spannungssignal beaufschlagt ist.

Derartige Vorrichtungen werden beispielsweise in Abstandsmeßgeräten eingesetzt. Hierbei ist es üblich, das einen Photostrom liefernde Ausgangssignal des Lichtempfängers einem Verstärker zuzuführen und mit dem Ausgangssignal des Verstärkers, welches als Spannungssignal vorliegt, einen weiteren Eingang der Mischstufe zu beaufschlagen. Somit liegen an der Mischstufe zwei Spannungssignale, nämlich das Ausgangssignal des Verstärkers sowie das Oszillator-Spannungssignal an.

Das Ausgangssignal der Mischstufe wird anschließend einer Integrierstufe zugeführt, wobei die Phase des Ausgangssignals der Integrierstufe in einer definierten Beziehung zu der zu ermittelnden Lichtlaufzeit steht.

Diese bekannten Systeme sind mit dem Nachteil behaftet, daß der erwähnte Verstärker einen amplituden- und temperaturabhängigen Phasengang aufweist, welcher nur mit hohem Aufwand und oftmals auch nur in unzureichender Weise vom gesuchten Phasengang des empfangenen Lichtsignals trennbar ist. Zudem begrenzen die Rauschbeiträge des Verstärkers die Phasenauflösung der bekannten Vorrichtungen.

Eine Aufgabe der Erfindung besteht darin, eine Vorrichtung der eingangs genannten Art derart weiterzubilden, daß die mit dem Verstärker verbundenen Nachteile, nämlich dessen Phasengang und dessen Rauschbeiträge, eliminiert werden.

Erfindungsgemäß wird diese Aufgabe dadurch gelöst, daß der den Photostrom liefernde Ausgang des Lichtempfängers ohne die Zwischenschaltung eines ein Spannungssignal liefernden Verstärkers einen weiteren Eingang der Mischstufe beaufschlagt, wobei der weitere Eingang der Mischstufe zur Verarbeitung eines Stromsignals geeignet ist.

Im Gegensatz zum Stand der Technik wird die Mischstufe erfindungsgemäß also zum einen mit dem Oszillator-Spannungssignal und zum anderen mit dem einen Photostrom liefernden Ausgangssignal des Lichtempfängers beaufschlagt, so daß der Mischstufe letztlich ein Spannungs- und ein Stromsignal zugeführt werden. Da erfindungsgemäß also kein Verstärker eingesetzt wird, welcher das einen Photostrom liefernde Ausgangssignal des Lichtempfängers in ein Spannungssignal umsetzt, lassen sich die eingangs erwähnten Nachteile des Verstärkers vollständig vermeiden. Dies wirkt sich insbesondere deshalb besonders positiv aus, da das Ausgangssignal des Lichtempfängers meist einen sehr hohen, oftmals bis zu sechs Zehnerpotenzen reichenden Amplituden-Dynamikbereich besitzt, so daß bei großen Eingangssignalen der Phasengang und bei kleinen Eingangssignalen das Rauschen des bisher benötigten Verstärkers besonders störend wirkten.

Weitere Vorteile der Erfindung werden nachfolgend noch im Zusammenhang mit bevorzugten Ausführungsformen beschrieben.

Von Vorteil ist es, wenn die Mischstufe zwei, insbesondere als jeweils ein Feldeffektransistor ausgebildete Schalter aufweist, wobei der jeweilige Schalterzustand durch das Oszillatorsignal steuerbar ist. In diesem Fall werden also beide Schalter durch Beaufschlagung des vom Oszillator gelieferten Spannungssignals mit der Frequenz des Oszillators geöffnet und geschlossen. Dabei wird bevorzugt der eine Schalterzustand durch das Oszillatorsignal und der andere Schalterzustand durch das invertierte Oszillatorsignal gesteuert, so daß beide Schalter ein zueinander inverses Schaltverhalten aufweisen. Die Eingänge beider Schalter können gemeinsam mit dem den Photostrom liefernden Ausgang des Lichtempfängers verbunden werden, so daß bedingt durch die erwähnte Steuerung der Schalter je nach Phasenlage der Photostrom des Lichtempfängers teilweise über den einen und teilweise über den anderen Schalter fließt, was bedeutet, daß an den Ausgängen der Mischstufe, die durch die Ausgänge der beiden Schalter gebildet sind, abwechselnd das Ausgangssignal des Lichtempfänger anliegt. Aus den beiden Ausgangssignalen der Mischstufe läßt sich anschließend der Phasengang des Ausgangssignals des Lichtempfängers gegenüber dem Oszillator-Spannungssignal ermitteln, was nachfolgend noch erläutert wird.

Die erfindungsgemäße Vorrichtung arbeitet bevorzugt mit einem ein Rechteck-Taktsignal liefernden Oszillator, welcher sowohl die Mischstufe als auch den Lichtsender beaufschlagt, so daß der Lichtsender ein entsprechend gepulstes Lichtsignal abgibt. Alternativ können Mischstufe und Lichtsender auch mit voneinander unterschiedlichen Oszillator-Signalen beaufschlagt werden, die jedoch eine definierte Phasenbeziehung zueinander besitzen müssen, um so einen Rückschluß auf die Lichtlaufzeit zuzulassen.

Durch die vorstehend beschriebene Ausbildung der Mischstufe mit zwei Schaltern bzw. zwei Feldeffekttransistoren läßt sich ein linearer Mischvorgang erreichen, welcher im Gegensatz zum Stand der Technik über den gesamten Amplituden-Dynamikbereich allenfalls einen vernachlässigbaren amplitudenabhängigen Phasengang aufweist. Durch einen solchen Phasengang hervorgerufene Fehler werden somit vollständig eliminiert.

Die beiden Ausgänge der Mischstufe können mit einer Integrierstufe verbunden werden, wobei die Integrierstufe zum separaten Integrieren beider Schalterausgangssignale und insbesondere auch zur Differenzbildung zwischen den beiden integrierten Schalterausgangssignalen ausgelegt sein kann. Die Funktionsweise einer solchen Integrierstufe wird nachstehend noch im Rahmen der Figurenbeschreibung näher erläutert.

Grundsätzlich kann die Integrierstufe als rein aktives oder als kombiniert passives/aktives Element ausgebildet werden.

Falls die Integrierstufe als kombiniert passives/aktives Element ausgebildet werden soll, ist es bevorzugt, wenn sie zumindest einen, von den beiden Schalterausgangssignalen beaufschlagten Multiplexer aufweist, dessen Ausgänge mit dem Eingang jeweils eines Kondensators (passives Element) verbunden sind, wobei die Ausgänge des Kondensators jeweils einen Eingang eines weiteren Multiplexers beaufschlagen, welcher seinerseits zumindest zwei Ausgänge aufweist. Dabei können die beiden Ausgänge des weiteren Multiplexers mit den Eingängen eines insbesondere integrierenden aktiven Differenzelements verbunden werden. Auch die Funktionsweise einer solchen Integrierstufe wird nachfolgend anhand der Figurenbeschreibung noch näher erläutert.

Besonders vorteilhaft arbeitet die erfindungsgemäße Vorrichtung dann, wenn eine Mehrzahl von Lichtempfängern über ein oder mehrere Schaltelemente mit dem einen Eingang der Mischstufe gekoppelt werden. Auf diese Weise läßt sich die erfindungsgemäße Vorrichtung mehrkanalig ausführen, wobei wahlweise jeweils ein Empfangskanal auf die Mischstufe aufschaltbar ist. Da keiner der Kanäle zwischen Lichtempfänger und Mischstufe einen Verstärker benötigt, lassen sich die erfindungsgemäßen Vorteile für jeden einzelnen Kanal verwirklichen.

Insbesondere ist eine zumindest zweikanalige Ausbildung der erfindungsgemäßen Vorrichtung sinnvoll, da auf diese Weise - neben einem Meßkanal - ein Referenzkanal zur Verfügung steht, welcher beispielsweise einem gehäuseinternen Referenzlichtpfad zugeordnet ist und welcher dazu dient, Temperaturabhängigkeiten der erfindungsgemäßen Vorrichtung zu eliminieren. Weder hinsichtlich des Referenzlichtempfängers noch hinsichtlich des für den Meßkanal zuständigen Lichtempfängers müssen in diesem Fall die aus dem Stand der Technik bekannten Nachteile von sich unterschiedlich verhaltenden Verstärkern in Kauf genommen werden, da solche Verstärker erfindungsgemäß nicht mehr nötig sind.

Von Vorteil ist es, wenn jeder Lichtempfänger mit je einer Gleichstrom-Kompensationsschaltung verbunden ist, so daß auf diese Weise weitgehend konstante bzw. niederfrequente Störsignale für jeden Lichtempfänger separat eliminiert werden können. Alternativ ist es auch möglich, daß jeder Lichtempfänger mit einer gemeinsamen Gleichstrom-Kompensationsschaltung verbindbar ist.

Weitere bevorzugte Ausführungsformen der Erfindung sind in den Unteransprüchen beschrieben.

Die Erfindung wird nachfolgend anhand von Ausführungsbeispielen unter Bezugnahme auf die Zeichnungen erläutert; in diesen zeigen:
- Fig. 1: ein Blockschaltbild einer möglichen Ausführungsform einer erfindungsgemäßen Vorrichtung,
- Fig. 2: ein Schaltbild einer erfindungsgemäßen Mischstufe gemäß einer ersten Ausführungsform,
- Fig. 3: ein Schaltbild einer erfindungsgemäßen Mischstufe gemäß zweiten Ausführungsform,
- Fig. 4: eine erste Ausführungsform einer erfindungsgemäß zum Einsatz gelangenden Integrierstufe,
- Fig. 5: die Strom- bzw. Spannungsverläufe an den Ein- und Ausgängen einer Mischstufe gemäß Fig. 3,
- Fig. 6: die Spannungs-Phasenbeziehung des Ausgangssignals der Integrierstufe gemäß Fig. 4,
- Fig. 7: die Spannungs-Phasenbeziehung zweier unterschiedlicher Ausgangssignale der Integrierstufe gemäß Fig. 4, die zum Ausgleich von Asymmetrien der beiden Mischkanäle der erfindungsgemäßen Mischstufe herangezogen werden können, und
- Fig. 8: eine zweite Ausführungsform einer erfindungsgemäß zum Einsatz gelangenden Integrierstufe.

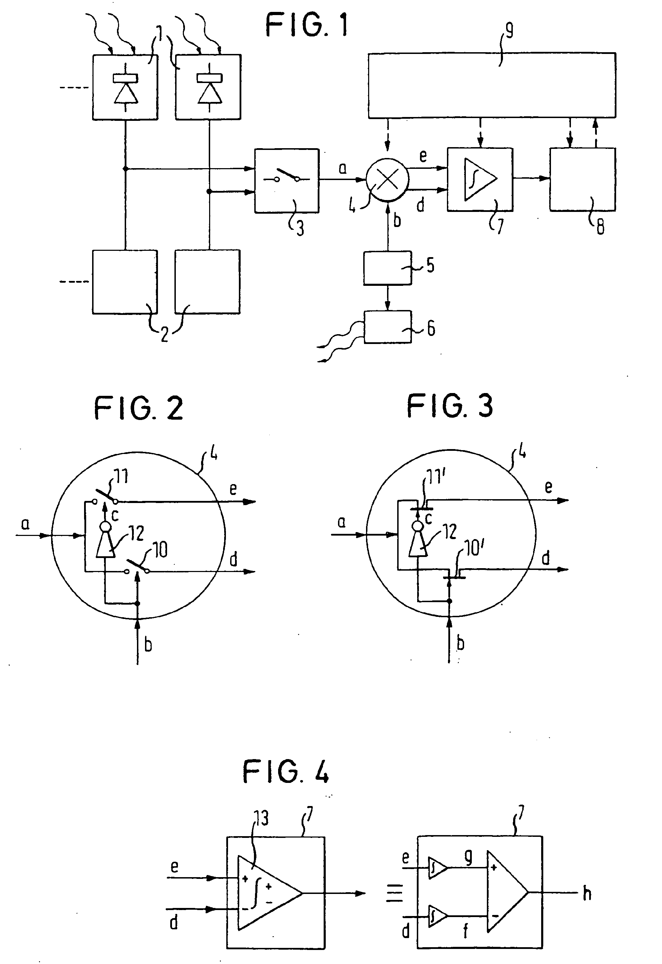

Die erfindungsgemäße Vorrichtung gemäß Fig. 1 weist eine Mehrzahl von Lichtempfängern 1 auf, welche jeweils mit einer Gleichtstrom-Kompensationsschaltung 2 verbunden sind. Die Ausgangssignale beider Lichtempfänger 1 sind einer beispielsweise als Multiplexer ausgebildeten Schalteranordnung 3 zugeführt, wobei die Anzahl der Eingänge der Schalteranordnung 3 der Anzahl der Lichtempfänger 1 entspricht. Mittels der Schalteranordnung 3 kann wahlweise jedes Ausgangssignal der Lichtempfänger 1 auf den Ausgang der Schalteranordnung 3 gelegt werden.

Der Ausgang der Schalteranordnung 3 ist einem Eingang einer Mischstufe 4 zugeführt, wobei ein weiterer Eingang der Mischstufe 4 mit dem Ausgang eines Lokaloszillators 5 verbunden ist. Der Lokaloszillator 5 seinerseits beaufschlagt nicht nur den weiteren Eingang der Mischstufe 4, sondern ebenfalls einen Lichtsender 6, welcher ein gepulstes Lichtsignal aussendet, dessen Frequenz der Frequenz des Lokaloszillators 5 entspricht.

Die Mischstufe 4 besitzt zwei Ausgänge, welche eine Integrierstufe 7 beaufschlagen, deren Ausgang mit einem Auswerte-Baustein 8 gekoppelt ist.

Mischstufe 4, Integrierstufe 7 sowie Auswerte-Baustein 8 werden von einer Steuereinheit 9 kontrolliert.

Beim Betrieb der Vorrichtung gemäß Fig. 1 sendet der Lokaloszillator 5 ein Taktsignal sowohl an die Mischstufe 4 als auch an den Lichtsender 6, wobei diese beiden Taktsignale entweder identisch sind oder eine bekannte Phasenbeziehung zueinander aufweisen. Der Lichtsender 6 sendet ein entsprechend getaktetes Lichtsignal aus, welches beispielsweise über eine Meßstrecke und eine Referenzstrecke geführt werden kann. Das über die Referenzstrecke geführte Lichtsignal erfährt bedingt durch die Lichtlaufzeit immer eine konstante Verzögerung, da sich die Länge der Referenzstrecke nicht ändert. Die Verzögerung, die das über die Meßstrecke gesendete Lichtsignal erfährt, ist hingegen abhängig von der Länge der Meßstrecke. Diese Verzögerung wird dann letztlich zur Bestimmung der Länge der Meßstrecke herangezogen.

Einer der beiden Lichtempfänger 1 empfängt das über die Meßstrecke und der andere der beiden Lichtempfänger 1 empfängt das über die Referenzstrecke gesandte Lichtsignal, wobei jeder der beiden Empfänger 1 mit einer Gleichstrom-Kompensationsschaltung 2 gekoppelt ist, welche jeweils für die Beseitigung von Gleichstrom-Störsignalen und niederfrequenten Störsignalen verantwortlich sind.

Die Schalteranordnung 3 bewirkt, daß wahlweise immer nur eines der beiden von den Lichtempfängern 1 empfangenen Signale zur Mischstufe 4 durchgeschaltet wird. Mittels der Schalteranordnung 3 können also abwechselnd das der Meßstrecke und das der Referenzstrecke zugeordnete Signal auf die Mischstufe 4 aufgeschaltet werden.

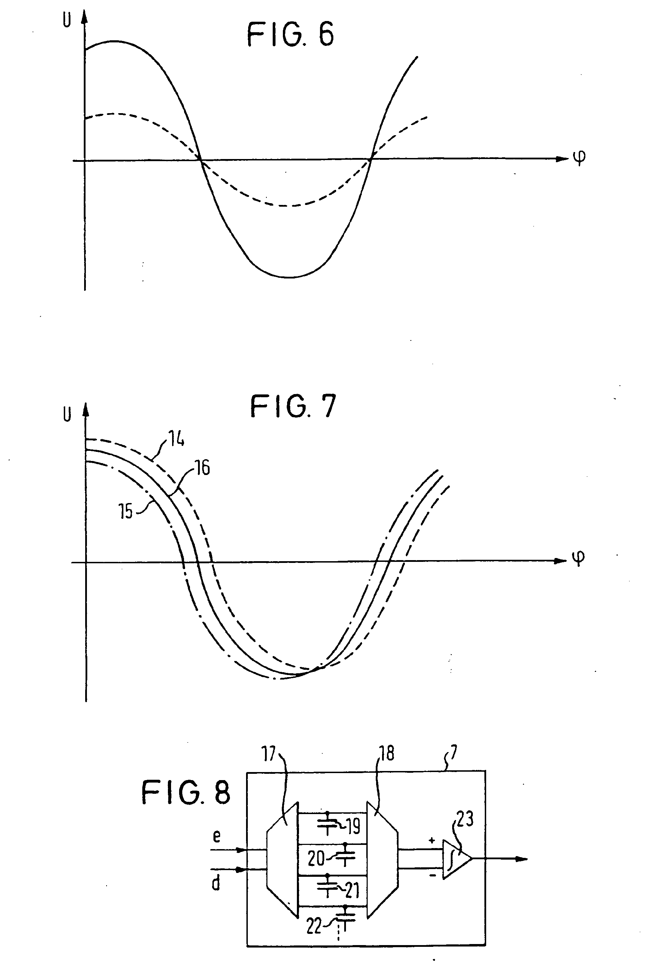

Die Funktion der Mischstufe 4 wird nachfolgend noch anhand der Fig. 2, 3 und 5 erläutert. Die der Mischstufe 4 nachfolgende Integrierstufe 7 wird nachfolgend noch anhand der Fig. 4 und 8 erläutert.

Fig. 2 zeigt die Mischstufe 4 gemäß Fig. 1, der zum einen das Signal a von der Schalteranordnung 3 und zum anderen das Signal b vom Lokaloszillator 5 zugeführt wird. Das Signal a wird zu den Eingängen von zwei parallel angeordneten Schaltern 10, 11 verzweigt, deren Ausgänge die beiden Ausgangssignale e und d der Mischstufe 4 bilden.

Der Schalter 10 wird durch das Signal b des Lokaloszillators 5 gesteuert, d. h., der Schalter 10 ist geöffnet, wenn das Signal b des Lokaloszillators 5 "0" ist und er ist geschlossen, wenn dieses Signal b "1" ist.

Das Signal b des Lokaloszillators 5 wird weiterhin auf einen Inverter 12 gelegt, dessen Ausgangssignal c den Schalter 11 steuert. Dementsprechend ist der Schalter 11 immer dann geöffnet, wenn der Schalter 10 geschlossen ist und umgekehrt.

Fig. 3 zeigt eine Fig. 2 entsprechende Anordnung, bei der im Unterschied zu Fig. 2 lediglich anstelle der Schalter 10, 11 Feldeffekttransistoren 10', 11' zum Einsatz gelangen. Die Basis der Feldeffektransistoren 10', 11' ist dabei entsprechend Fig. 2 mit den Signalen b und c beaufschlagt, die in diesem Fall z.B. auch eine Sinusform aufweisen können, so daß auch die Mischstufe 4 letztlich kein hartes Schalten, sondern lediglich eine Sinusmodulation des Signals a bewirkt.

Fig. 4 zeigt ein Blockschaltbild einer als aktives Element 13 ausgebildeten Integrierstufe 7, die mit den Ausgangssignalen e und d der Mischstufe 4 beaufschlagt ist. Das aktive Element 13 bildet die Integrale der beiden Signale e und d, subtrahiert diese Integrale anschließend voneinander und liefert als Ausgangssignal das durch die genannte Subtraktion erhaltene Differenzsignal.

Das beschriebene aktive Element 13 ist in Fig. 4 auch nochmals aufgeteilt in seine Bestandteile gezeigt. Aus dieser Darstellung geht hervor, daß die Signale d und e jeweils separaten Integrierstufen zugeführt werden. Die Ausgangssignale f und g dieser beiden Integrierstufen sind an die beiden Eingänge eines Differenzelements angelegt, dessen Ausgangssignal h die Differenz zwischen den beiden Signalen f und g darstellt.

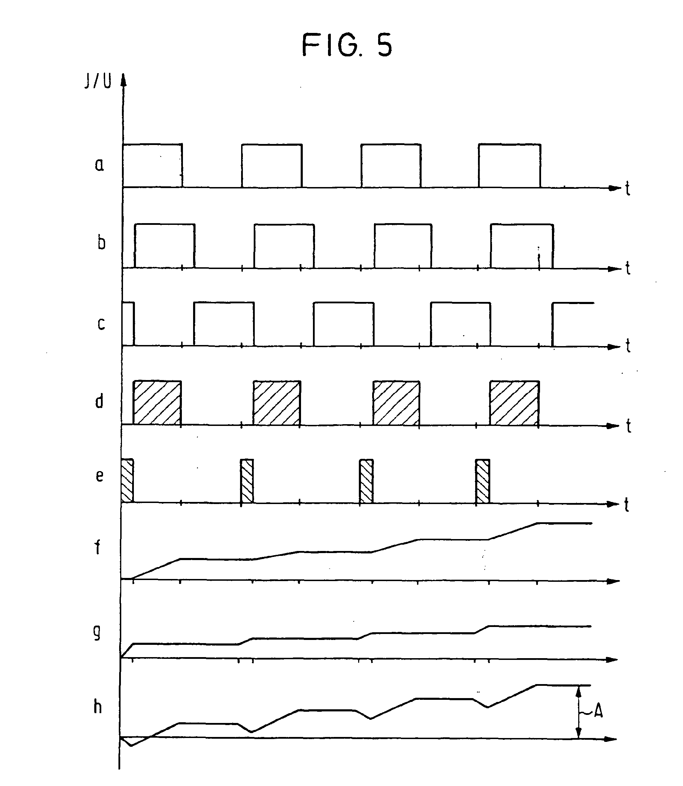

Fig. 5 zeigt die Zeitverläufe der Signale a bis h beim Betrieb einer Anordnung gemäß Fig. 1 in demjenigen Zustand der Schalteranordnung 3, bei dem das über die Meßstrecke gesendete Lichtsignal dem Signal a zugeordnet ist.

Das vom Lichtempfänger 1 gelieferte Stromsignal a und das vom Lokaloszillator gelieferte Spannungssignal b weisen im wesentlichen die gleiche Frequenz und die gleiche Impulsdauer auf, wobei jedoch die Phase beider Signale aufgrund der Lichtlaufzeit über die Meßstrecke zueinander verschoben ist.

Das Signal c stellt lediglich das invertierte Signal b da, wobei diese Invertierung durch den Inverter 12 (Fig. 2 und 3) bewirkt wird.

Aufgrund der in Verbindung mit den Fig. 2 und 3 erläuterten Anordnung der Schalter 10, 11 bzw. der Feldeffekttransistoren 10', 11' wird das Signal a immer dann auf den Ausgang d durchgeschaltet, wenn das Signal b des Lokaloszillators 5 den Wert "1" aufweist. Dementsprechend ist das Signal d immer dann "1", wenn sowohl das Signal a als auch das Signal b den Wert "1" aufweisen.

Das Ausgangssignal e der Mischstufe 4 hingegen nimmt immer dann den Wert "1" an, wenn sowohl das Signal a als auch das Signal c den Wert "1" aufweisen, da der Schalter 11 bzw. der Feldeffektransistor 11' mit dem inversen Signal c des Lokaloszillators 5 beaufschlagt ist.

Die der Mischstufe 4 nachfolgende Integrierstufe 7 bildet die beiden Integrale f und g der Signale d und e und subtrahiert diese Integrale dann voneinander, wodurch das Signal h erhalten wird. Die Amplitude A dieses, von der Integrierstufe 7 gelieferten Differenzsignals h ist somit abhängig vom Grad der Phasenverschiebung bzw. vom Cosinus der Phasenverschiebung zwischen den beiden Signalen a und b und dementsprechend auch von der Lichtlaufzeit des vom Lichtsender 6 über die Meßstrecke gesandten Lichtsignals.

Wenn beispielsweise das über die Meßstrecke gesandte Lichtsignal aufgrund einer längeren Strecke eine geringfügig stärkere Verzögerung erfahren würde, als in Fig. 5 dargestellt, wären die Impulse des Signals a leicht nach rechts verschoben, wohingegen die Signale b und c unverändert blieben. Dementsprechend wären die Impulse des Signals d etwas breiter und die Impulse des Signals e etwas schmäler, so daß sich die Differenz der beiden Integralsignale entsprechend verändern würde.

Fig. 6 zeigt die Amplituden/Phasenbeziehung zweier möglicher Ausgangssignale der Integrierstufe 7. Beide Signale sind jeweils gleich langen Meßstrecken zugeordnet, d. h., die zu ermittelnde Phasenverschiebung zwischen den Signalen a und b (Fig. 1) ist bezüglich beider in Fig. 6 dargestellter Signale gleich groß. Dementsprechend besitzen beide Signale auch einen identischen Nulldurchgang.

Der Unterschied zwischen den beiden in Fig. 6 dargestellten Signalen besteht lediglich darin, daß das durchgezogen gezeichnete Signal von einem Eingangssignal a höherer und das gepunktet gezeichnete Signal von einem Eingangssignal a niedrigerer Amplitude stammt. Fig. 6 veranschaulicht somit, daß unabhängig von der Amplitude durch die Bestimmung des Nulldurchgangs immer die korrekte Phasenbeziehung ermittelt werden kann.

Fig. 7 veranschaulicht, daß Asymmetrien zwischen den beiden Kanälen der Mischstufe 4 dadurch ausgeglichen werden können, daß die der Integrierstufe zugeführten Signalen d und e zyklisch miteinander vertauscht werden, so daß am Ausgang der Integrierstufe 7 zwei unterschiedliche Signale 14 und 15 erhalten werden. Durch die Mittelung dieser beiden Signale 14 und 15 wird dann das letztlich zur Auswertung herangezogene Signal 16 erhalten, dessen Nulldurchgang zwischen den Nulldurchgängen der Signale 14 und 15 liegt und somit Asymmetrien kompensiert.

Fig. 8 zeigt eine Integrierstufe 7, welche einen ersten Multiplexer 17 aufweist, dessen beide Eingänge mit den von der Mischstufe 4 gelieferten Signalen e und d beaufschlagt sind. Die Ausgänge des Multiplexers 17 sind mit den Eingängen eines weiteren Multiplexers 18 verbunden, welcher zwei Ausgänge besitzt, die einem aktiven differenzbildenden Integrator 23 zugeführt sind. Das Ausgangssignal dieses Integrators 8 bildet das Ausgangssignal der gesamten Integrierstufe 7 gemäß Fig. 8.

Jeder Verbindungsleitung zwischen einem Ausgang des Multiplexers 17 und einem Eingang des Multiplexers 18 ist ein (passiver) Kondensator 19, 20, 21, 22 zugeordnet, wobei hier ohne weiteres beliebig mehr Verbindungsleitungen und dementsprechend auch beliebig mehr Kondensatoren vorgesehen sein können.

Die Hälfte der Kondensatoren 19 bis 22 sind dem Eingangssignal d und die anderen Hälfte dem Eingangssignal e zugeordnet. Jeder Takt des Eingangssignals e bzw. d führt dazu, daß ein dem jeweiligen Eingangssignal zugeordneter Kondensator 19 bis 22 entsprechend aufgeladen wird, wobei der nächste Takt des Eingangssignals e bzw. d zum Aufladen eines weiteren Kondensators 19 bis 22 führt. Somit wird jeder Takt jedes Eingangssignals in jeweils unterschiedlichen Kondensatoren 19 bis 22 gespeichert, so daß keiner der Kondensatoren 19 bis 22 an seine Kapazitätsgrenze gelangt.

Die Ladungen der Kondensatoren 19 bis 22 werden dann gezielt nacheinander oder in Gruppen über den Multiplexer 18 dem Integrator 23 zugeführt, welcher aus diesen Ladungen das Ausgangssignal der Integrierstufe 7 erzeugt.

### Bezugszeichen

- 1: Lichtempfänger
- 2: Gleichstrom-Kompensationsschaltung
- 3: Schalteranordnung
- 4: Mischstufe
- 5: Lokaloszillator
- 6: Lichtsender
- 7: Integrierstufe
- 8: Auswerte-Baustein
- 9: Steuereinheit
- 10: Schalter
- 10': Feldeffekttransistor
- 11: Schalter
- 11': Feldeffekttransistor
- 12: Invertierer
- 13: aktives Element
- 14: Signal
- 15: Signal
- 16: Signal
- 17: Multiplexer
- 18: Multiplexer
- 19: Kondensator
- 20: Kondensator
- 21: Kondensator
- 22: Kondensator
- 23: Integrator

## Patentansprüche

1. Vorrichtung zur Ermittlung der Lichtlaufzeit mit einem von einem Oszillator (5) beaufschlagten Lichtsender (6), einem Lichtempfänger (1), einer Mischstufe (4), sowie einer Auswerteeinheit (7, 8, 9), wobei ein Eingang der Mischstufe von einem Oszillator-Spannungssignal (b) beaufschlagt ist,
**dadurch gekennzeichnet,**
**dass** der den Photostrom liefernde Ausgang des Lichtempfängers (1) ohne die Zwischenschaltung eines ein Spannungssignal liefernden Verstärkers einen weiteren Eingang der Mischstufe (4) beaufschlagt, wobei der weitere Eingang der Mischstufe (4) zur Verarbeitung eines Stromsignals geeignet ist.

2. Vorrichtung nach Anspruch 1,
**dadurch gekennzeichnet,**
**daß** die Mischstufe (4) zwei Schalter (10, 11) aufweist, wobei der jeweilige Schalterzustand durch das Oszillatorsignal (b, c) steuerbar ist.

3. Vorrichtung nach Anspruch 2,
**dadurch gekennzeichnet,**
**daß** ein Schalterzustand durch das Oszillatorsignal (b) und der andere Schalterzustand durch das invertierte Oszillatorsignal (c) steuerbar ist.

4. Vorrichtung nach Anspruch 2 oder 3,
**dadurch gekennzeichnet,**
**daß** die Eingänge beider Schalter (10, 11) mit dem den Photostrom liefernden Ausgang des Lichtempfängers (1) verbunden sind.

5. Vorrichtung nach Anspruch 2 bis 4,
**dadurch gekennzeichnet,**
**daß** beide Schalter als jeweils ein Feldeffekttransistor (10', 11') ausgebildet sind.

6. Vorrichtung nach Anspruch 2 bis 5,
**dadurch gekennzeichnet,**
**daß** die Ausgänge beider Schalter (10, 10', 11, 11') mit einer Integrierstufe (7) verbunden sind.

7. Vorrichtung nach Anspruch 6,
**dadurch gekennzeichnet,**
**daß** die Integrierstufe (7) zur separaten Integrierung beider Schalterausgangssignale (d, e) und insbesondere auch zur Differenzbildung zwischen den beiden integrierten Schalterausgangssignalen (d, e) ausgelegt ist.

8. Vorrichtung nach Anspruch 6 oder 7,
**dadurch gekennzeichnet,**
**daß** die Integrierstufe (7) als rein aktives oder als kombiniert passives/aktives Element ausgebildet ist.

9. Vorrichtung nach Anspruch 6 bis 8,
**dadurch gekennzeichnet,**
**daß** die Integrierstufe (7) zumindest einen, von den beiden Schalterausgangssignalen (d, e) beaufschlagten Multiplexer (17) aufweist, dessen Ausgänge mit dem Eingang jeweils eines Kondensators (19 bis 22) verbunden sind, wobei die Ausgänge der Kondensatoren (19 bis 22) jeweils einen Eingang eines weiteren Multiplexers (18) beaufschlagen, welcher seinerseits zumindest zwei Ausgänge aufweist.

10. Vorrichtung nach Anspruch 9,
**dadurch gekennzeichnet,**
**daß** die beiden Ausgänge des weiteren Multiplexers (18) mit den Eingängen eines insbesondere integrierenden Differenzelements (23) verbunden sind.

11. Vorrichtung nach einem der vorherigen Ansprüche,
**dadurch gekennzeichnet,**
**daß** eine Mehrzahl von Lichtempfängern (1) über ein oder mehrere Schaltelemente (3) mit dem Eingang der Mischstufe (4) koppelbar sind.

12. Vorrichtung nach einem der vorherigen Ansprüche,
**dadurch gekennzeichnet,**
**daß** jeder Lichtempfänger (1) mit je einer Gleichstrom-Kompensationsschaltung (2) verbunden ist, oder daß jeder Lichtempfänger (1) mit einer gemeinsamen Gleichstrom-Kompensationsschaltung verbindbar ist.

## Claims

1. An apparatus for the determination of the transit time of light using a light transmitter (6) acted on by an oscillator (5), a light receiver (1), a mixer stage (4) and an evaluation unit (7, 8, 9), with an oscillator voltage signal (b) being applied to an input of the mixer stage,
**characterised in that**
the output of the light receiver (1) delivering the photocurrent is applied to a further input of the mixer stage (4) without the interposition of an amplifier delivering a voltage signal, with the further input of the mixer stage (4) being suitable for the processing of a current signal.

2. An apparatus in accordance with claim 1, **characterised in that** the mixer stage (4) has two switches (10, 11), with the respective switch state being controllable by the oscillator signal (b, c).

3. An apparatus in accordance with claim 2, **characterised in that** one switch state can be controlled by the oscillator signal (b) and the other switch state by the inverted oscillator signal (c).

4. An apparatus in accordance with claim 2 or claim 3, **characterised in that** the inputs of both switches (10, 11) are connected to the output of the light receiver (1) delivering the photocurrent.

5. An apparatus in accordance with claim 2 to claim 4, **characterised in that** both switches are each made as a field effect transistor (10', 11').

6. An apparatus in accordance with claim 2 to claim 5, **characterised in that** the outputs of both switches (10, 10', 11, 11') are connected to an integration stage (7).

7. An apparatus in accordance with claim 6, **characterised in that** the integration stage (7) is configured for the separate integration of both switch output signals (d, e) and in particular also for the difference formation between the two integrated circuit output signals (d, e).

8. An apparatus in accordance with claim 6 or claim 7, **characterised in that** the integration stage (7) is designed as a purely active element or as a combined passive/active element.

9. An apparatus in accordance with claim 6 to claim 8, **characterised in that** the integration stage (7) has at least one multiplexer (17) to which the two switch output signals (d, e) are applied and whose outputs are connected to the input of a respective capacitor (19 to 22), with the outputs of the capacitors (19 to 22) each being applied to an input of a further multiplexer (18) which in turn has at least two outputs.

10. An apparatus in accordance with claim 9, **characterised in that** the two outputs of the further multiplexer (18) are connected to the inputs of a difference element (23), in particular an integrating difference element.

11. An apparatus in accordance with any one of the preceding claims, **characterised in that** a plurality of light receivers (1) can be coupled to the input of the mixer stage (4) via one or more switch elements (3).

12. An apparatus in accordance with any one of the preceding claims, **characterised in that** each light receiver (1) is connected to one respective direct current compensation circuit (2); or **in that** each light receiver (1) can be connected to a common direct current compensation circuit.

## Revendications

1. Dispositif de détection d'un temps de parcours de la lumière, comportant un émetteur de lumière (6) sollicité par un oscillateur (5), un récepteur de lumière (1), un étage mélangeur (4) ainsi qu'une unité d'évaluation (7, 8, 9), dans lequel une entrée de l'étage mélangeur est sollicitée par un signal de tension d'oscillateur (b),
**caractérisé en ce que**
la sortie du récepteur de lumière (1), qui fournit le courant photoélectrique, sollicite une autre entrée de l'étage mélangeur (4) sans intercaler un amplificateur fournissant un signal de tension, l'autre sortie de l'étage mélangeur (4) étant appropriée pour traiter un signal de courant.

2. Dispositif selon la revendication 1,
**caractérisé en ce que**
l'étage mélangeur (4) présente deux commutateurs (10, 11), l'état de commutateur respectif pouvant être commandé par le signal d'oscillateur (b, c).

3. Dispositif selon la revendication 2,
**caractérisé en ce que**
un état de commutateur peut être commandé par le signal d'oscillateur (b) et l'autre état de commutateur peut être commandé par le signal d'oscillateur (c) inversé.

4. Dispositif selon la revendication 2 ou 3,
**caractérisé en ce que**
les entrées des deux commutateurs (10, 11) sont reliées à la sortie du récepteur de lumière (1), qui fournit le courant photoélectrique.

5. Dispositif selon l'une des revendications 2 à 4,
**caractérisé en ce que**
les deux commutateurs sont réalisés chacun sous forme de transistor à effet de champ (10', 11').

6. Dispositif selon l'une des revendications 2 à 5,
**caractérisé en ce que**
les sorties des deux commutateurs (10, 10', 11, 11') sont reliées à un étage d'intégration (7).

7. Dispositif selon la revendication 6,
**caractérisé en ce que**
l'étage d'intégration (7) est conçu pour intégrer séparément les deux signaux de sortie de commutateur (d, e) et en particulier aussi pour former la différence entre les deux signaux de sortie de commutateur (d, e) intégrés.

8. Dispositif selon la revendication 6 ou 7,
**caractérisé en ce que**
l'étage d'intégration (7) est réalisé sous forme d'élément purement actif ou sous forme d'élément combiné passif/actif.

9. Dispositif selon l'une des revendications 6 à 8,
**caractérisé en ce que**
l'étage d'intégration (7) présente au moins un multiplexeur (17) sollicité par les deux signaux de sortie de commutateur (d, e), dont les sorties sont reliées à l'entrée d'un condensateur (19 à 22) respectif, les sorties des condensateurs (19 à 22) sollicitant chacune une entrée d'un autre multiplexeur (18) qui présente lui-même au moins deux sorties.

10. Dispositif selon la revendication 9,
**caractérisé en ce que**
les deux sorties de l'autre multiplexeur (18) sont reliées aux entrées d'un élément de différence (23) en particulier intégrant.

11. Dispositif selon l'une des revendications précédentes,
**caractérisé en ce que**
une multitude de récepteurs de lumière (1) peuvent être couplés à l'entrée de l'étage mélangeur (4) via un ou plusieurs éléments de commutation (3).

12. Dispositif selon l'une des revendications précédentes,
**caractérisé en ce que**
chaque récepteur de lumière (1) est relié à un circuit de compensation de courant continu (2) respectif ou **en ce que** chaque récepteur de lumière (1) peut être relié à un circuit de compensation de courant continu commun.
